# EUROPEAN PATENT APPLICATION

(11) **EP 2 199 965 A1**
(43) Date of publication of application: **23.06.2010**
(21) Application number: 09158506.7
(22) Date of filing: 22.04.2009
(51) Int. Cl.: G06Q 20/00

(54) **Payment transaction client, server and system**

(71) Applicant: Euro-Wallet B.V., 7511 JE Enschede (NL)
(72) Inventor: Rottink, Ger, 7511 JE, Enschede (NL); Hagesteijn, Sander, 7511 JE, Enschede (NL)
(74) Representative: Groot Koerkamp, Jasper Henri

(57) **Abstract**

The invention relates to a system for handling payment transactions, comprising a payment transaction client and a payment transaction server. A customer identifies himself by providing a code to a shop, preferably by a bar code. The shop sends customer identification, shop identification, client identification and the amount to the server. The server looks up further customer information, checks the balance on the account of customer and issues a payment confirmation code to the mobile telephone of the customer if the customer has enough credit on the account. The customer provides the code to the shop or directly to the client, upon which the client sends the payment confirmation code and further information like the information sent previously to the server. If the confirmation code received matches the confirmation code issues early, the server executes the payment or instructs a bank to execute the payment.

## Description

### FIELD OF THE INVENTION

The invention relates to a payment transaction client, a payment transaction server, a system for handling payment transactions, a method of operating a payment transaction client, a method of operating a payment transaction server, a computer program product comprising computer executable code to program a computer to execute a method of operating a payment transaction client, a computer program product comprising computer executable code to program a computer to execute a method of operating a payment transaction server, a computer programmed to execute a method of operating a payment transaction client and a computer programmed to execute a method of operating a payment transaction server.

### BACKGROUND OF THE INVENTION

The Rabobank in the Netherlands has a service for transferring money by means of SMS (short message service). The service comprises the steps of: a user opening a mobile wallet and to put money in the mobile wallet; sending an SMS to the bank with an amount to be transferred and the mobile telephone number of the receiver to receive the amount; the user receiving an SMS with a codeword; the user sending the codeword to the bank; executing the transfer; and the receiver receiving a notification with the amount and the sender.

Though the service is offered for free, users still have to pay for sending the SMS. This means that transferring money from one account to the other still has costs attached to it. In addition, the user has to send two SMS messages to the bank, which may be perceived as cumbersome.

### OBJECT AND SUMMARY OF THE INVENTION

It is an object of the invention to facilitate a simple electronic payment method. The invention provides in a first aspect a payment transaction client for handling a payment transaction by a payer to a receiver, comprising: a first input unit that can be coupled to a reading unit for reading payer identification information identifying the payer and for receiving the payer identification information from the reading unit; a processing unit for generating transaction information comprising information representing the amount of the payment transaction and information representing the payer identification information; a sending unit for sending transaction information representing the payment transaction to a payment transaction server; and a second input unit for receiving a payment confirmation code from the payer for confirming the payment transaction, the payer having received the payment confirmation code sent by the payment transaction server in response to the payment transaction server receiving the transaction information.

An advantage of this payment transaction client is that handling payment transactions does not require the payer to send out any messages, thus removing the need for the payer to make costs.

In an embodiment of the payment transaction client according to the invention, the sending unit is further conceived to send authentication information comprising the payment confirmation code to the payment transaction server for authentication and wherein the payment transaction client further comprises a receiving unit for receiving an authentication confirmation code sent by the payment transaction server in response to the payment transaction server having received and authenticated the payment confirmation code. An advantage of this embodiment is that the payment transaction client can be kept relatively simple and therefore cheap to implement. In addition, all security matters are handled by the payment transaction server, which provides security as it will be difficult for shop owners (receivers) as well as customers (payers) to tamper with the security. The invention provides in a second aspect a payment transaction server for handling a payment transaction by a payer to a receiver, comprising: a receiving unit for receiving transaction information from a payment transaction client, the transaction information comprising information representing the amount of the payment transaction and information representing identification information identifying the payer; a processing unit for issuing a payment confirmation code, in response to receiving the payment transaction information; a memory unit for storing further identification information comprising payer contact information; the processing unit being further conceived to look up the further identification information and to identify the payer by means of the identification information and the payer contact information; and a sending unit for contacting the identified payer and for sending the payment confirmation code to the identified payer, enabling the payer to confirm the payment transaction. An advantage of this payment transaction server is that it enables safe and simple payment transaction handling.

In an embodiment of the payment transaction server according to the invention, the receiving unit is further conceived to receive the payment confirmation code sent by the payment transaction client in response to receiving the payment confirmation code from the payer, the payment transaction server further comprising an authentication unit for verifying whether the payment confirmation code is correct and wherein the processing unit is further conceived to issue a payment execution command for executing the payment transaction if the payment confirmation code is correct.

An advantage of this embodiment is that the payment transaction client can be kept relatively simple and therefore cheap to implement. In addition, all security matters are handled by the payment transaction server, which provides security as it will be difficult for shop owners (receivers) as well as customers (payers) to tamper with the security. Furthermore, the various transmissions of information are automatically triggered by other actions, which means that actions from users of the payment transaction server and the payment transaction client can be kept to a minimum, which makes the system convenient to use.

In an embodiment of the payment transaction server according to the invention, the payment transaction server is operatively connected to an account information storage for storing account information related to an account of the payer, the account information comprising an amount on the account, wherein the processing unit is further conceived to: compare the amount of the payment transaction to the amount on the account; to issue the payment confirmation code if the amount on the account is higher than the amount of the transaction; and to issue an error code if the amount on the account is lower than the amount of the transaction.

An advantage of this embodiment is that an operator of the payment transaction server as well as the receiver like a shop keeper has assurance that the payer (the customer) has indeed the money to actually perform the payment transaction. Of course, the operator could enable a credit facility for the payer, but this creates a risk to the operator.

The invention provides in a third aspect a system for handling payment transactions by a payer to a receiver, comprising the payment transaction client provided in the first aspect and the payment transaction server provided in the second aspect.

Though both client and server can be marketed separately, they both work best in a system comprising them both, emphasizing their advantages.

The invention provides in a fourth aspect a method of operating a payment transaction client for handling a payment transaction by a payer to a receiver, comprising: receiving identification information identifying the payer; generating transaction information comprising information representing the amount of the payment transaction and information representing the payer identification information; sending the transaction information to a payment transaction server; and receiving a payment confirmation code from the payer for confirming the payment transaction.

The invention provides in a fifth aspect a method of operating a payment transaction server, comprising: receiving transaction information from a payment transaction client, the transaction information comprising information representing the amount of the payment transaction and information representing the identification information; issue a payment confirmation code in response to receiving the payment transaction information; looking up further identification information comprising payer contact information identifying the payer by means of contact information; identifying the payer by means of the identification information and contact information; contacting the identified payer using the contact information; and sending the payment confirmation code to the identified payer, enabling the payer to confirm the payment transaction.

The invention provides in a sixth aspect a computer program product comprising computer executable code to program a computer to execute a method of operating a payment transaction client for handling a payment transaction by a payer to a receiver, comprising: receiving identification information identifying the payer; generating transaction information comprising information representing the amount of the payment transaction and information representing the payer identification information; sending the transaction information to a payment transaction server; and receiving a payment confirmation code from the payer for confirming the payment transaction.

The invention provides in a seventh aspect a computer program product comprising computer executable code to program a computer to execute a method of operating a payment transaction server, comprising: receiving transaction information from a payment transaction client, the transaction information comprising information representing the amount of the payment transaction and information representing the identification information; issue a payment confirmation code in response to receiving the payment transaction information; looking up further identification information comprising payer contact information identifying the payer by means of contact information; identifying the payer by means of the identification information and contact information; contacting the identified payer using the contact information; and sending the payment confirmation code to the identified payer, enabling the payer to confirm the payment transaction.

The invention provides in an eighth aspect a computer programmed to execute a method of operating a payment transaction client for handling a payment transaction by a payer to a receiver, comprising: receiving identification information identifying the payer; generating transaction information comprising information representing the amount of the payment transaction and information representing the payer identification information; sending the transaction information to a payment transaction server; and receiving a payment confirmation code from the payer for confirming the payment transaction.

The invention provides in a ninth aspect a computer programmed to execute a method of operating a payment transaction server, comprising: receiving transaction information from a payment transaction client, the transaction information comprising information representing the amount of the payment transaction and information representing the identification information; issue a payment confirmation code in response to receiving the payment transaction information; looking up further identification information comprising payer contact information identifying the payer by means of contact information identifying the payer by means of the identification information and contact information; contacting the identified payer using the contact information; and sending the payment confirmation code to the identified payer, enabling the payer to confirm the payment transaction.

### BRIEF DESCRIPTION OF THE DRAWINGS

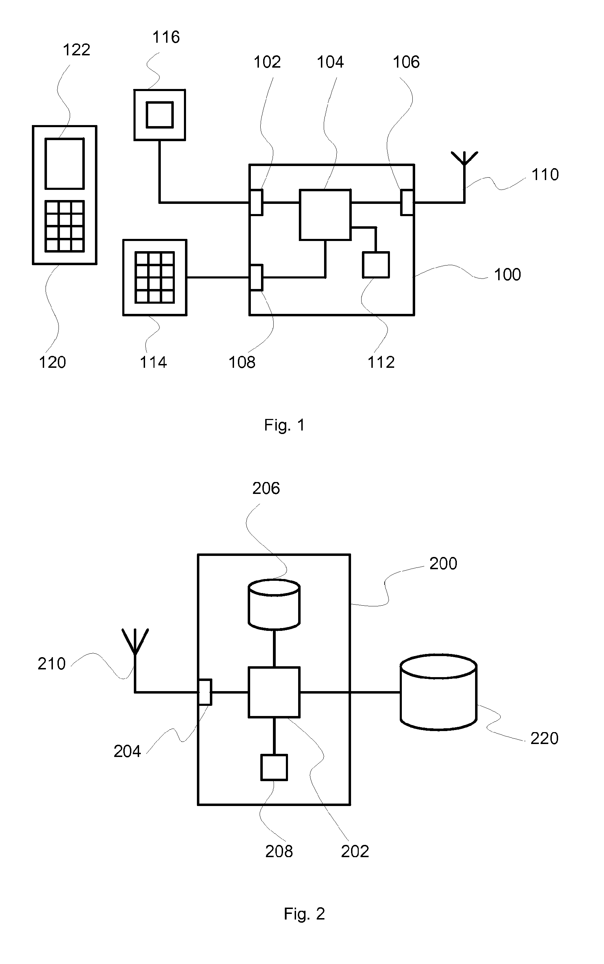

The invention will now be further disclosed by means of figures, in which Figure 1 shows an embodiment of the payment transaction client according to the invention;

Figure 2 shows an embodiment of the payment transaction server according to the invention; and

Figure 3 shows an embodiment of the method of operating a payment transaction client and the method of operating a payment transaction server.

### DESCRIPTION OF PREFERRED EMBODIMENTS

Figure 1 shows a payment transaction client 100 as an embodiment of the payment transaction client according to the invention. The payment transaction client 100 comprises a first input unit 102, a processing unit 104, a sending unit 106, a second input unit 108 and a client authentication unit 112. Figure 1 further shows a reading unit 116 operatively coupled to the first input unit 102, a keypad 114 operatively coupled to the second input 108, an antenna 110 coupled to the sending unit 106 and a mobile telephone terminal 120 belonging to a customer and comprising a screen 122.

In this embodiment, the reading unit 116 is a barcode scanner. Alternatively, the reading unit can be embodied as an RFID (radio frequency identification) tag reader or an NFC (Near Field Communication) reader, a fingerprint reader or a as a keypad.

The payment transaction client 100 is envisaged for being the front end for a payment transaction process in a shop, though a person skilled in the art will readily appreciate that the payment transaction client 100 can be used in any other environment where payments are being made as well.

Figure 2 shows a payment transaction server 200 as an embodiment of the payment transaction server according to the invention. The payment transaction server 200 comprises a processing unit 202, a receiving unit 204 alternatively acting as a sending unit which is operatively coupled to an antenna 210, a storage unit 206 and an authentication unit 208. Alternatively, sending an receiving of information is handled through a separate sending unit and receiving unit. The processing unit 202 is operatively coupled to an account information storage unit 220. Alternatively, the account storage unit 220 is comprised by the payment transaction server 200 or the storage unit 206 acts as the account storage unit 220.

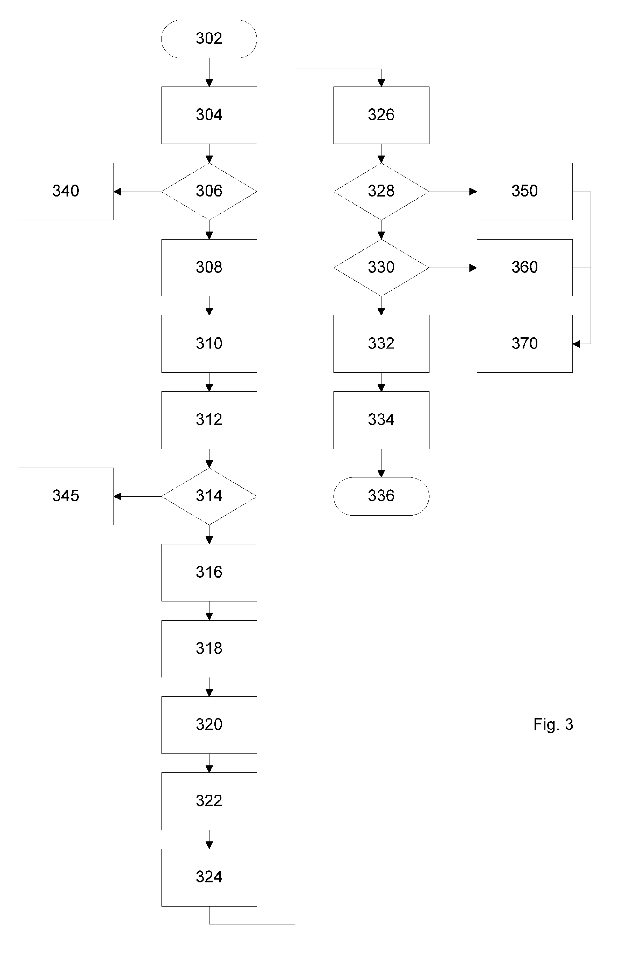

Figure 3 shows a flow diagram depicting an embodiment of the method according to the invention. The table below provides an indication of the process steps in the flow diagram.

| Reference numeral | Process step |
|---|---|
| 302 | A shop representative (receiver) issues a payment request to a customer (payer), for a certain transaction amount |
| 304 | The customer provides an identification and the identification is read |
| 306 | The processing unit of the payment transaction client calculates a checksum of the identification information and verifies the checksum |
| 308 | Transaction information is sent to the payment transaction server |
| 310 | The payment transaction server receives the transaction information |
| 312 | Based on the transaction information, the payment identification server looks up account information coupled to the customer |
| 314 | The processing unit of the payment transaction server verifies whether the account holds enough credit to have the transaction amount debited |
| 316 | The transaction amount is blocked on the customers account |
| 318 | The payment transaction server issues a payment confirmation code to the customer |
| 320 | The customer receives the payment confirmation code |
| 322 | The customer provides the payment confirmation code to the payment transaction client |
| 324 | The payment transaction client sends authentication information to the payment transaction server |
| 326 | The payment transaction server receives the authentication information |
| 328 | The payment transaction server verifies whether the authentication information has been received within a pre-determined period |
| 330 | The payment transaction server verifies whether the payment confirmation code provided to the payment transaction client is correct |
| 332 | The payment transaction server executes a command to transfer the payment amount from the customers account to the account of the shop |
| 334 | The payment transaction server issues a payment acknowledgement to the payment transaction client |
| 336 | The payment transaction is terminated |
| 340 | If the checksum of the identification information is not correct, the payment transaction client issues a notification of this |
| 345 | If the checksum is incorrect, the payment transaction client issues a notification |
| 350 | If the authentication information has not been received in time by the payment transaction server, the server issues a notification to the payment transaction client |
| 360 | If the authentication information received by the payment transaction server is incorrect, the server issues a notification to the payment transaction client |
| 370 | The transaction amount previously blocked is released to the customers account |

The payment process starts after a customer indicates that he (or she) wants to purchase an item in a shop. Subsequently, a shop representative like an employee or a shop owner indicates the customer the amount to be paid and requests the amount to be paid, as depicted by step 302. Subsequently, in step 304, the customer provides his identification information by means of a barcode to the reader 116. The barcode can be provided on a card, a small card or tag, on the screen 122 of the mobile telephone 120, on a sticker attached to the mobile telephone 120 or by other means that can be envisaged by a person skilled in the art. Ideally, the identification information is represented by means of a number, though a series of alphanumerical characters can be used as well without departing from the scope of protection.

Though, as already indicated, other means of identification can be used, the barcode has an advantage that reading can be done very quickly. In addition, a lot of shops, in particular supermarkets, are equipped with barcode readers with every cash register. This means that the cash register can be adapted in an easy and relatively cheap way to execute this embodiment of the method according to the invention.

Having received the identification information from the reader 116, the processing unit 104 calculates a checksum from the identification information and verifies this checksum in step 306. The checksum can be calculated in various ways know to a person skilled in the art; one well known way is to add all digits of a number, where the sum requires to be an even number. If the checksum does not satisfy a pre-determined criterion, the process branches to step 340 by the payment transaction client issuing a notification. Subsequently, the process is ended.

If the checksum satisfies the pre-determined criterion, the payment transaction client 102 sends transaction information to the payment transaction server 200. The payment transaction information is sent by means of the sending unit 106. The sending unit 106 is embodied as a modem (modulator-demodulator) which means that it can operate as a receiving unit as well, sending and receiving information via the antenna 110. The information sent and received can take place by many know communication protocols, like GSM, GPRS, either by regular data transfer or SMS (Short Message Service), by 3G communication standards like HSDPA, TD-SCDMA and others like wired communication standards like POTS, DSL or cable, without departing from the scope of the invention.

In this embodiment, the payment transaction information comprises information representing the amount of the payment transaction and information representing the customer identification. In another embodiment, the payment transaction information comprises information representing a payment terminal of the shop and information representing the shop as well. The information representing the customer identification is in this embodiment the number represented by the barcode. Alternatively, the information representing the customer identification may be a telephone number of the customer or (a part of) a number of a bank account of the customer.

As will be readily appreciated by a person skilled in the art, the information representing either the payment terminal of the shop and/or the information representing the shop can be either a mere identification number, but just as well a telephone number. The latter embodiment is particularly advantageous if communication between the payment transaction client 100 and the payment transaction server 200 takes place via a cellular communication standard, where communication units (sending units and receiving units) can be directly identified by means of a telephone number.

The payment transaction server receives the payment transaction information in step 310. The payment transaction information is received by a receiving unit 204. The sending unit 204 is embodied as a modem (modulator-demodulator) which means that it can operate as a sending unit as well, sending and receiving information via the antenna 210. Alternatively, sending and receiving of information is handled through a separate sending unit and receiving unit.

The information sent and received can take place by many known communication protocols, like GSM, GPRS, either by regular data transfer or SMS (Short Message Service), by 3G communication standards like HSDPA, TD-SCDMA and others like wired communication standards like POTS, DSL or cable, without departing from the scope of the invention.

Having received the payment transaction information, the payment transaction server employs the payment transaction server to look up information related to the customer in the storage unit 206 and the account storage unit 220. The information looked up comprises a telephone number of the customer, preferably for the mobile telephone 120 of the customer, and an amount of money stored on a bank account belonging to the customer. This bank account can either be an actual bank account with a registered bank or a virtual bank account coupled to this specific payment service. Subsequently, the transaction amount is compared to the amount available on the account in step 314. If the transaction amount exceeds the amount available on the account, a message is issued to the payment transaction client that the amount available on the account is insufficient to make the requested payment. Alternatively, this message is sent to the mobile telephone 120 of the customer as to prevent embarrassing the customer.

If the transaction amount is less than the amount available on the account, the transaction amount is blocked on the account of the customer in step 316. This is to prevent that several payment transactions are started in one time, of which the total amount exceeds the amount available on the account.

It will be appreciated by a person skilled in the art that step 314 and step 316 can be skipped if the customer has unlimited credit on the account.

In a further embodiment of the invention, the customer is charged for using this service. In that case, the amount blocked □ an used to check whether the payment can take place in the step 314 □ is the transaction amount, plus the transaction cost. In another embodiment, the shop is charged for the use of the service. In yet another embodiment the service is free. An advantage of this embodiment is that the price of the transaction can be varied independently from the cost of sending a message by either the customer or the shop representative. The cost charged to either the customer or the shop can be a fixed amount or an amount relative to the transaction amount. Subsequently in step 318, the payment transaction server 200 issues a payment confirmation code to the customer. Preferably, this payment confirmation code is a numerical code of four digits, though a person skilled in the art will appreciate that other forms of a payment confirmation code can be envisaged. In a further embodiment of the invention, the payment confirmation code can be accompanied with further information like the amount of the transaction. The advantage of this embodiment is that the customer receives a confirmation of the amount sent to the payment transaction client by the shop.

In a step 320, the customer receives the payment confirmation code on the mobile telephone terminal 120. The payment confirmation code can be visualised on the screen 122 of the mobile telephone terminal 120.

After having received the payment confirmation code, the customer provides the payment confirmation code to the payment transaction code in step 322 by means of the keypad 114.

Having received the payment confirmation code from the customer, the payment transaction client 100 sends authentication information comprising the payment confirmation code to the payment transaction server 200 in step 324. Preferably, the payment confirmation code is accompanied by information to identify the customer, the shop, the payment transaction client and the amount or a subset of this information.

The payment transaction server 200 receives the authentication information from the payment transaction client 100 in step 326.

Having received the authentication information, the payment transaction server 200 verifies whether the authentication information has been received within a pre-determined period. The pre-determined period is preferably between 10 and 30 seconds. If this is not the case, the payment transaction server 200 issues a message to the payment transaction client 100 that the authentication information has not been received in time. Alternatively, the message is sent to the mobile telephone terminal 120 of the customer. The advantage of this is that there will be no pile up of (unfinished) payment transaction processes running on the payment transaction server 200 or between the payment transaction server 200 and the payment transaction client 100.

In another alternative, the message that a payment transaction is timed out is automatically sent by the payment transaction server 200 after the pre-determined period has ended, instead of being triggered by the reception of the authentication information. This is in particular advantageous if the time-out is caused by malfunctioning of the payment transaction client 100 due to for example a power cut.

If a time-out occurs, the payment transaction server 200 issues in step 350 a message to the payment transaction client 100 informing the payment transaction client 100 that the authentication information has not been received within the pre-determined period. Optionally, this message includes information that the transaction has not been executed and that the payment transaction process has ended. Alternatively, the customer is invited to provide the payment transaction code again, in due time.

Subsequently, the amount previously blocked in step 316 is released to the account of the customer in step 370.

If the authentication information has been received within the pre-determined period, the payment transaction server 100 verifies in step 330 whether the payment confirmation code received from the payment transaction client 100, which in turn has been acquired by means of the keypad 114, is correct. If the payment confirmation code comprised by the authentication information should be exactly the same as previously issued by the payment transaction server 200 in step 318, the verification process comprises comparing the payment confirmation code received from the payment transaction client 100 to the payment confirmation code issued earlier.

If the payment confirmation code received from the payment transaction client 100 is not the same as the payment confirmation code issued earlier, the process branches to step 360. In this step, the payment transaction server issues a message to the payment transaction client 100 that the payment confirmation code received is not correct. Alternatively or additionally, this message is sent to the mobile telephone terminal 120 of the customer. Subsequently, the amount blocked previously in step 316 is released to the account of the customer in step 370.

If the payment confirmation code received from the payment transaction client 100 is the same as the payment confirmation code issued earlier, the payment transaction server 200 issues a command to debit the amount blocked to an account of the shop in step 332.

Subsequently, either the customer or the payment transaction client 100 □ or both □ are informed in step 334 that the payment transaction has been executed and the payment transaction process is terminated in terminator 336.

In another embodiment of the invention the authentication process takes place in the payment transaction client 100 by means of the client authentication unit 112. In this other embodiment, the client authentication unit 112 verifies whether the payment confirmation code provided by the customer to the payment transaction client 100 matches the payment confirmation code issued by the payment transaction server 200. To enable this, the payment transaction server sends the payment confirmation code to both the mobile telephone terminal 120 and to the payment transaction client 100.

The transaction amount can either be debited from a virtual account of the customer or from a real (bank) account of the customer. A virtual account can be constituted by the customer transferring a certain amount to an operator of the payment transaction service as disclosed above. This amount is kept by the operator and can only be used using the payment transaction service. This in contract to a real account with a bank that can be used for other transactions as well.

The virtual account embodiment has as an advantage that the operator does not need to interact with a bank upon verifying the balance of the account of the customer, thus saving additional communication with a bank. The real account embodiment has as an advantage that the customer does not need to create a virtual account with additional money on that account that cannot be used for other payment transactions using other payment transaction services.

To enable the payment transaction service as disclosed above, the customer needs to be identifiable by the operator. In an embodiment of the invention, the customer has to register with the operator of the payment transaction server by creating a user account. With the creation of the user account, the customer has to provide a password, a username, a (mobile) telephone number, further contact details like address and a bank account number. The registration can take place by filling in a paper form or by means of a first computer connected to a second computer of the operator, connect for example over the internet.

Upon registration, the customer receives an identifier, preferably by means of a bar code. As indicated earlier, this bar code can be provided by physical means like a tag, a card or a sticker to be stuck on for example the mobile telephone terminal 120. However, the bar code can be provided by electronic means as well, for example by sending the bar code as an MMS (multimedia service) message to the mobile telephone terminal 120.

Alternatively, the customer can obtain the bar code separately from the user account. In that specific embodiment, the customer has to couple the bar code to the user account. This can either be done upon creating the user account or at a later moment.

Having disclosed several embodiments of the invention according to the invention in several aspects, it will be apparent to a person skilled in the art that the various elements may be embodied in either software or hardware □ or a combination of both. This means that the invention may be embodied as a specifically programmed general purpose computer □ operatively coupled to the appropriate peripherals in case applicable □ but just a as well as a computer programme product for programming such a general purpose computer.

In summary, The invention relates to a system for handling payment transactions, comprising a payment transaction client and a payment transaction server. A customer identifies himself by providing a code to a shop, preferably by a bar code. The shop sends customer identification, shop identification, client identification and the amount to the server. The server looks up further customer information, checks the balance on the account of customer and issues a payment confirmation code to the mobile telephone of the customer if the customer has enough credit on the account. The customer provides the code to the shop or directly to the client, upon which the client sends the payment confirmation code and further information like the information sent previously to the server. If the confirmation code received matches the confirmation code issues early, the server executes the payment or instructs a bank to execute the payment.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim.

Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer operating either the payment transaction server or client or operating as the payment transaction server or client.

In device claims enumerating several means, several of these means may be embodied by one and the same item of hardware. The mere fact that certain measures or elements are recited in mutually different dependent claims or have been disclosed in individual different embodiments does not indicate that a combination of these measures cannot be used to advantage without departing from the scope of the invention; a person skilled in the art will readily appreciate that those means or elements may be combined to such advantage.

## Claims

1. Payment transaction client for handling a payment transaction by a payer to a receiver, comprising:
a) a first input unit that can be coupled to a reading unit for reading payer identification information identifying the payer and for receiving the payer identification information from the reading unit;
b) a processing unit for generating transaction information comprising information representing the amount of the payment transaction and information representing the payer identification information;
c) a sending unit for sending transaction information representing the payment transaction to a payment transaction server; and
d) a second input unit for receiving a payment confirmation code from the payer for confirming the payment transaction, the payer having received the payment confirmation code sent by the payment transaction server in response to the payment transaction server receiving the transaction information.

2. Payment transaction client according to claim 1, wherein the payment transaction client further comprises an authentication unit for verifying whether the payment confirmation code correctly represents the payment transaction and wherein the sending unit is further conceived to send a transaction execution command to the payment transaction server if the payment confirmation code correctly represents the payment transaction.

3. Payment transaction client according to claim 1, wherein the sending unit is further conceived to send authentication information comprising the payment confirmation code to the payment transaction server for authentication and wherein the payment transaction client further comprises a receiving unit for receiving an authentication confirmation code sent by the payment transaction server in response to the payment transaction server having received and authenticated the payment confirmation code.

4. Payment transaction server for handling a payment transaction by a payer to a receiver, comprising:
a) a receiving unit for receiving transaction information from a payment transaction client, the transaction information comprising information representing the amount of the payment transaction and information representing identification information identifying the payer;
b) a processing unit for issuing a payment confirmation code, in response to receiving the payment transaction information;
c) a memory unit for storing further identification information comprising payer contact information;
d) the processing unit being further conceived to look up the further identification information and to identify the payer by means of the identification information and the payer contact information; and
e) a sending unit for contacting the identified payer and for sending the payment confirmation code to the identified payer, enabling the payer to confirm the payment transaction.

5. Payment transaction server according to claim 4, wherein the receiving unit is further conceived to receive the payment confirmation code sent by the payment transaction client in response to receiving the payment confirmation code from the payer, the payment transaction server further comprising an authentication unit for verifying whether the payment confirmation code is correct and wherein the processing unit is further conceived to issue a payment execution command for executing the payment transaction if the payment confirmation code is correct.

6. Payment transaction server according to claim 4, wherein the receiving unit is further conceived to receive a transaction execution command from the client and wherein the processing unit is further conceived to execute the payment transaction upon receiving the transaction execution command.

7. Payment transaction server according to claim 4, wherein the payment transaction server is operatively connected to an account information storage for storing account information related to an account of the payer, the account information comprising an amount on the account, wherein the processing unit is further conceived to:
a) compare the amount of the payment transaction to the amount on the account; to issue the payment confirmation code if the amount on the account is higher than the amount of the transaction; and
b) to issue an error code if the amount on the account is lower than the amount of the transaction.

8. System for handling payment transactions by a payer to a receiver, comprising:
a) A payment transaction client for handling a payment transaction by a payer to a receiver, comprising:
i) a first input unit that can be coupled to a reading unit for reading payer identification information identifying the payer and for receiving the payer identification information from the reading unit;
ii) a processing unit for generating transaction information comprising information representing the amount of the payment transaction and information representing the payer identification information;
iii) a sending unit for sending transaction information representing the payment transaction to a payment transaction server; and
iv) a second input unit for receiving a payment confirmation code from the payer for confirming the payment transaction, the payer having received the payment confirmation code sent by the payment transaction server in response to the payment transaction server receiving the transaction information; and
b) a payment transaction server for handling a payment transaction by a payer to a receiver, comprising:
i) a receiving unit for receiving transaction information from a payment transaction client, the transaction information comprising information representing the amount of the payment transaction and information representing the identification information;
ii) a processing unit for issuing a payment confirmation code, in response to receiving the payment transaction information;
iii) a memory unit for storing further identification information comprising payer contact information;
iv) the processing unit being further conceived to look up the further identification information and to identify the payer by means of the identification information and the payer contact information; and
v) a sending unit for contacting the identified payer and for sending the payment confirmation code to the identified payer, enabling the payer to confirm the payment transaction.

9. Method of operating a payment transaction client for handling a payment transaction by a payer to a receiver, comprising:
a) receiving identification information identifying the payer;
b) generating transaction information comprising information representing the amount of the payment transaction and information representing the payer identification information;
c) sending the transaction information to a payment transaction server; and
d) receiving a payment confirmation code from the payer for confirming the payment transaction.

10. Method of operating a payment transaction server, comprising:
a) receiving transaction information from a payment transaction client, the transaction information comprising information representing the amount of the payment transaction and information representing the identification information;
b) issue a payment confirmation code in response to receiving the transaction information;
c) looking up further identification information comprising payer contact information identifying the payer by means of contact information;
d) identifying the payer by means of the identification information and/or contact information;
e) contacting the identified payer using the contact information; and
f) sending the payment confirmation code to the identified payer, enabling the payer to confirm the payment transaction.

11. Computer program product comprising computer executable code to program a computer to execute a method of operating a payment transaction client for handling a payment transaction by a payer to a receiver, comprising:
a) receiving identification information identifying the payer;
b) generating transaction information comprising information representing the amount of the payment transaction and information representing the payer identification information;
c) sending the transaction information to a payment transaction server; and
d) receiving a payment confirmation code from the payer for confirming the payment transaction.

12. Computer program product comprising computer executable code to program a computer to execute a method of operating a payment transaction server, comprising:
a) receiving transaction information from a payment transaction client, the transaction information comprising information representing the amount of the payment transaction and information representing the identification information;
b) issue a payment confirmation code in response to receiving the payment transaction information;
c) looking up further identification information comprising payer contact information identifying the payer by means of contact information
d) identifying the payer by means of the identification information and contact information;
e) contacting the identified payer using the contact information; and
f) sending the payment confirmation code to the identified payer, enabling the payer to confirm the payment transaction.

13. Computer programmed to execute a method of operating a payment transaction client for handling a payment transaction by a payer to a receiver, comprising:
a) receiving identification information identifying the payer;
b) generating transaction information comprising information representing the amount of the payment transaction and information representing the payer identification information;
c) sending the transaction information to a payment transaction server; and
d) receiving a payment confirmation code from the payer for confirming the payment transaction.

14. Computer programmed to execute a method of operating a payment transaction server, comprising:
a) receiving transaction information from a payment transaction client, the transaction information comprising information representing the amount of the payment transaction and information representing the identification information;
b) issue a payment confirmation code in response to receiving the payment transaction information;
c) looking up further identification information comprising payer contact information identifying the payer by means of contact information
d) identifying the payer by means of the identification information and contact information;
e) contacting the identified payer using the contact information; and
f) sending the payment confirmation code to the identified payer, enabling the payer to confirm the payment transaction.

## Amended claims

### Amended claims in accordance with Rule 137(2) EPC.

**1.** Payment transaction server for handling a payment transaction by a payer to a receiver, comprising:
a) a receiving unit for receiving transaction information from a payment transaction client, the transaction information comprising information representing the amount of the payment transaction and information representing identification information identifying the payer;
b) a processing unit for issuing a payment confirmation code, in response to receiving the payment transaction information;
c) a memory unit for storing further identification information comprising payer contact information;
d) the processing unit being further conceived to look up the further identification information and to identify the payer by means of the identification information and the payer contact information; and
e) a sending unit for contacting the identified payer and for sending the payment confirmation code to the identified payer, enabling the payer to confirm the payment transaction;
**characterised in that** the server is arranged to block the amount of the payment transaction on an account of the payer after receiving the transaction information.

**2.** Payment transaction server according to claim 4, wherein the receiving unit is further conceived to receive the payment confirmation code sent by the payment transaction client in response to receiving the payment confirmation code from the payer, the payment transaction server further comprising an authentication unit for verifying whether the payment confirmation code is correct and wherein the processing unit is further conceived to issue a payment execution command for executing the payment transaction if the payment confirmation code is correct.

**3.** Payment transaction server according to claim 4, wherein the receiving unit is further conceived to receive a transaction execution command from the client and wherein the processing unit is further conceived to execute the payment transaction upon receiving the transaction execution command.

**4.** Payment transaction server according to claim 6, wherein the server is further conceived to debit the amount blocked on the account of the payer to an account of the receiver.

**5.** Payment transaction server according to claim 4, wherein the payment transaction server is operatively connected to an account information storage for storing account information related to an account of the payer, the account information comprising an amount on the account, wherein the processing unit is further conceived to:
a) compare the amount of the payment transaction to the amount on the account; to issue the payment confirmation code if the amount on the account is higher than the amount of the transaction; and
b) to issue an error code if the amount on the account is lower than the amount of the transaction.

**6.** System for handling payment transactions by a payer to a receiver, comprising:
a) A payment transaction client for handling a payment transaction by a payer to a receiver, comprising:
i) a first input unit that can be coupled to a reading unit for reading payer identification information identifying the payer and for receiving the payer identification information from the reading unit;
ii) a processing unit for generating transaction information comprising information representing the amount of the payment transaction and information representing the payer identification information;
iii) a sending unit for sending transaction information representing the payment transaction to a payment transaction server; and
iv) a second input unit for receiving a payment confirmation code from the payer for confirming the payment transaction, the payer having received the payment confirmation code sent by the payment transaction server in response to the payment transaction server receiving the transaction information; and
b) a payment transaction server for handling a payment transaction by a payer to a receiver, comprising:
i) a receiving unit for receiving transaction information from a payment transaction client, the transaction information comprising information representing the amount of the payment transaction and information representing the identification information;
ii) a processing unit for issuing a payment confirmation code, in response to receiving the payment transaction information;
iii) a memory unit for storing further identification information comprising payer contact information;
iv) the processing unit being further conceived to look up the further identification information and to identify the payer by means of the identification information and the payer contact information; and
v) a sending unit for contacting the identified payer and for sending the payment confirmation code to the identified payer, enabling the payer to confirm the payment transaction;
**characterised in that** the server is arranged to block the amount of the payment transaction on an account of the payer after receiving the transaction information.

**7.** Method of operating a payment transaction server, comprising:
a) receiving transaction information from a payment transaction client, the transaction information comprising information representing the amount of the payment transaction and information representing the identification information;
b) issue a payment confirmation code in response to receiving the transaction information;
c) looking up further identification information comprising payer contact information identifying the payer by means of contact information;
d) identifying the payer by means of the identification information and/or contact information;
e) contacting the identified payer using the contact information; and
f) sending the payment confirmation code to the identified payer, enabling the payer to confirm the payment transaction;
**characterised in that** the method further comprises blocking the amount of the payment transaction on an account of the payer after receiving the transaction information.

**8.** Computer program product comprising computer executable code to program a computer to execute a method of operating a payment transaction server, comprising:
a) receiving transaction information from a payment transaction client, the transaction information comprising information representing the amount of the payment transaction and information representing the identification information;
b) issue a payment confirmation code in response to receiving the payment transaction information;
c) looking up further identification information comprising payer contact information identifying the payer by means of contact information
d) identifying the payer by means of the identification information and contact information;
e) contacting the identified payer using the contact information; and
f) sending the payment confirmation code to the identified payer, enabling the payer to confirm the payment transaction;
**characterised in that** the method further comprises blocking the amount of the payment transaction on an account of the payer after receiving the transaction information.

**9.** Computer programmed to execute a method of operating a payment transaction server, comprising:
a) receiving transaction information from a payment transaction client, the transaction information comprising information representing the amount of the payment transaction and information representing the identification information;
b) issue a payment confirmation code in response to receiving the payment transaction information;
c) looking up further identification information comprising payer contact information identifying the payer by means of contact information
d) identifying the payer by means of the identification information and contact information;
e) contacting the identified payer using the contact information; and
f) sending the payment confirmation code to the identified payer, enabling the payer to confirm the payment transaction;
**characterised in that** the method further comprises blocking the amount of the payment transaction on an account of the payer after receiving the transaction information.
